# EUROPÄISCHE PATENTSCHRIFT

(11) **EP 2 553 630 B1**
(45) Veröffentlichungstag und Bekanntmachung des Hinweises auf die Patenterteilung: **08.05.2019**
(21) Anmeldenummer: 11711497.5
(22) Anmeldetag: 22.03.2011
(51) Int. Cl.: G06K 9/20

(54) **VORRICHTUNG UND VERFAHREN ZUR IDENTIFIKATION VON PERSONEN**
APPARATUS AND METHOD FOR IDENTIFYING PERSONS
PROCÉDÉ ET DISPOSITIF D'IDENTIFICATION DE PERSONNES

(30) Priorität: 31.03.2010 DE 102010013580
(43) Veröffentlichungstag der Anmeldung: 06.02.2013
(73) Patentinhaber: Rohde & Schwarz GmbH & Co. KG, 81671 München (DE)
(72) Erfinder: EVERS, Christian, 85551 Kirchheim (DE)
(74) Vertreter: Körfer, Thomas
(86) Internationale Anmeldenummer: PCT/EP2011/054359
(87) Internationale Veröffentlichungsnummer: WO 2011/120846

(56) Entgegenhaltungen:
- EP-A1- 2 136 315
- WO-A2-2008/015565
- US-A1- 2004 090 359
- US-A1- 2004 240 711
- US-A1- 2005 232 459
- US-A1- 2007 211 922
- US-A1- 2007 263 907
- TU P H ET AL: "An intelligent video framework for homeland protection", PROCEEDINGS OF SPIE, THE INTERNATIONAL SOCIETY FOR OPTICAL ENGINEERING SPIE, USA, Bd. 6562, 27. April 2007 (2007-04-27), Seiten 65620C-1, XP002538255, ISSN: 0277-786X
- "Security Technology", IEEE AEROSPACE AND ELECTRONIC SYSTEMS MAGAZINE, IEEE SERVICE CENTER, PISCATAWAY, NJ, US, Bd. 15, Nr. 10, 1. Oktober 2000 (2000-10-01), Seiten 131-136, XP011090227, ISSN: 0885-8985, DOI: 10.1109/62.879436
- KRUEGLE H ED - HERMAN KRUEGLE: "CCTV surveillance : analog and digital video practices and technology. Passage from chapter 28: New Video Technology", 1. Januar 2007 (2007-01-01), CCTV SURVEILLANCE : ANALOG AND DIGITAL VIDEO PRACTICES AND TECHNOLOGY, ELSEVIER BUTTERWORTH HEINEMANN, PAGE(S) 609 - 611, XP007905757, ISBN: 978-0-7506-7768-4

## Beschreibung

Die vorliegende Erfindung bezieht sich auf eine Vorrichtung und ein Verfahren zur Identifikation von Personen.

Sicherheitskontrollpunkte sind überall dort vorhanden, wo es um die Überprüfung von Personen geht, denen Zugang zu einem bestimmten sicherheitsrelevanten Bereich gewährt werden soll. Dabei kann es sich um Kontrollpunkte in Flughafenterminals handeln, an denen die Flugpassagiere mit ihren Ausweisdokumenten einchecken, um ihren gebuchten Flug anzutreten, oder es handelt sich um Sicherheitsschleusen z.B. in Forschungszentren, Banken oder Industrieunternehmen, an denen die Identität der Mitarbeiter festgestellt werden soll. Alle diese Sicherheitskontrollpunkte haben das gemeinsame Ziel, dass die Personen einerseits möglichst eindeutig identifiziert werden sollen und dass diese andererseits den gesamten Vorgang möglichst nicht als unangenehm empfinden. Dabei soll der Identifikationsvorgang nur ein Minimum an Zeit beanspruchen.

Aus der EP 1 629 415 B1 sind bereits ein System und ein Verfahren zum Abgleichen von Gesichtern bekannt. Dabei werden über mehrere Kameras, die in unterschiedlichen Winkeln angeordnet sind, verschiedene Bilder von der zu identifizierenden Person gemacht, die neben Vorderansichten des Gesichts auch Profilansichten zeigen. Dabei werden unterschiedliche Merkmale gewonnen, die mit Merkmalen in einem der zu überprüfenden Person zugehörigen Profil verglichen werden. Bei den Merkmalen handelt es sich beispielsweise um Distanzmessungen zwischen der Nase, dem Ohr und anderen Orientierungspunkten zu einem relativen Knotenpunkt in der Gesichtslandschaft. Durch Verwendung seitlich angeordneter Kameras kann ein dreidimensionales Abbild des Gesichts der zu untersuchenden Person erstellt werden, welches z.B. Information über das Relief oder die Tiefe des Gesichts beinhaltet.

Nachteilig an der EP 1 629 415 B1 ist, dass eine zu untersuchende Person nur dann richtig erkannt werden kann, wenn die zur Identifikation notwendigen Merkmale durch das Kamerasystem erfasst werden. Trägt die zu untersuchende Person z.B. eine Kopfbedeckung, einen Gesichtsschleier oder längere Haare, die Teile des Gesichts und/oder die Ohren verdecken, so erschwert dies die automatische Identifikation der Person. Außerdem handelt es sich bei den Merkmalen zur Identifikation nur um Merkmale, die aus dem sichtbaren Teil des Gesichts extrahiert werden können. Andere Merkmale wie z.B. die Körpergröße oder die Schädelform werden nicht zur Identifikation der Person herangezogen.

Es ist daher die Aufgabe der Erfindung, ein Verfahren und ein Personenidentifikationssystem zur Identifizierung von Personen zu schaffen, welches eine Vielzahl von biometrischen Merkmalen erfasst und mit gespeicherten biometrischen Merkmalen vergleicht, wobei die biometrischen Merkmale auch dann sicher erkannt werden sollen, wenn diese z.B. von Haaren oder Stoffen verdeckt sind.

Diese Aufgabe wird durch das erfindungsgemäße Verfahren gemäß dem Anspruch 1 und durch das erfindungsgemäße Personenidentifikationssystem gemäß dem Anspruch 12 gelöst. In den Unteransprüchen sind vorteilhafte Weiterbildungen des erfindungsgemäßen Verfahrens und des erfindungsgemäßen Personenidentifikationssystem dargestellt.

Das erfindungsgemäße Verfahren zur Identifikation von Personen weist dabei verschiedene Verfahrensschritte auf. In einem ersten Schritt soll die zu identifizierende Person in einer Abtasteinheit platziert werden, welche die zu identifizierende Person mit einer elektromagnetischen Strahlung, die eine Wellenlänge im mm-Bereich und/oder cm-Bereich aufweist, abtastet. In einem zweiten Schritt erzeugt die Abtasteinheit ein mehrdimensionales, bevorzugt ein dreidimensionales Abbild von Körpergeometrien der zu identifizierenden Person. In einem dritten Schritt wird das dreidimensionale Abbild der zu identifizierenden Person als Messdaten gespeichert. In einem vierten Schritt werden die gespeicherten Messdaten aufbereitet und die zur Identifikation notwendigen biometrischen Merkmale aus diesen Messdaten extrahiert. In einem fünften Schritt werden die extrahierten biometrischen Merkmale mit gespeicherten biometrischen Merkmalen abgeglichen.

Besonders vorteilhaft ist die Verwendung einer Abtasteinheit, welche die Person mit einer elektromagnetischen Strahlung im mm-Bereich und/oder cm-Bereich abtastet. Die elektromagnetische Strahlung wird dabei nicht bereits z.B. von der Kleidung oder der Haartracht der zu identifizierenden Person reflektiert, sondern erst von der darunter liegenden Hautschicht. Auf diese erfindungsgemäße Weise ist es möglich, ein sehr genaues dreidimensionales Abbild der Person zu erzeugen, so dass sich die zu extrahierenden biometrischen Merkmale nicht nur auf solche aus den Gesichtsbereichen beschränken. Im Vergleich zu bekannten Verfahren erfolgt die Identifikation der Person deutlich genauer und schneller, wobei es sich bei dem erfindungsgemäßen Verfahren um ein vollständig berührungsloses Verfahren handelt.

Das erfindungsgemäße Personenidentifikationssystem weist eine Abtasteinheit auf, die eine zu identifizierende Person mittels elektromagnetischer Strahlung, die eine Wellenlänge im mm-Bereich und/oder cm-Bereich aufweist, abtastet. Dabei erstellt das erfindungsgemäße Personenidentifikationssystem ein dreidimensionales Abbild von Körpergeometrien der zu identifizierenden Person und speichert dieses in einer Speichereinheit. Weiterhin weist das Personenidentifikationssystem eine Verarbeitungseinheit auf, die die gespeicherten Messdaten aufbereitet und die biometrischen Merkmale extrahiert. Die Verarbeitungseinheit vergleicht außerdem die extrahierten biometrischen Merkmale mit den biometrischen Merkmalen, die in zumindest ebenfalls gespeichert sind.

Besonders vorteilhaft ist die Verwendung einer Abtasteinheit, welche die Person mit einer elektromagnetischen Strahlung im mm-Bereich und/oder cm-Bereich abtastet. Die elektromagnetische Strahlung wird dabei nicht bereits von der Kleidung oder der Haartracht der zu identifizierenden Person reflektiert, sondern erst von der darunter liegenden Hautschicht. Auf diese erfindungsgemäße Weise ist es möglich, ein sehr genaues dreidimensionales Abbild der Person zu erzeugen, so dass sich die zu extrahierenden biometrischen Merkmale nicht nur auf solche aus den Gesichtsbereichen beschränken. Ebenfalls vorteilhaft ist die Verwendung einer Verarbeitungseinheit, die die biometrischen Merkmale aus den Messdaten extrahiert und mit biometrischen Merkmalen abgleicht die in verschiedenen Speichereinheiten gespeichert sind.

Ein weiterer Vorteil der Erfindung ist, dass die extrahierten biometrischen Merkmale in einem Identifikationsdokument oder z.B. für statistische Zwecke in einer Datenbank gespeichert werden können. Sobald eine Person identifiziert wurde, können zusätzliche Merkmale, wie z.B. der Körperumfang inn bestimmten Bereichen, in dem Identifikationsdokument gespeichert werden, so dass neben den biometrischen Merkmalen noch weitere nicht biometrische Merkmale zu Verfügung stehen, die für Plausibilitätsvergleiche herangezogen werden können.

Ein weiterer Vorteil der Erfindung besteht, wenn zusätzlich eine Kamera, insbesondere eine Videokamera und/oder Fotokamera, mit der Steuereinheit verbunden ist, wobei die Videobilder und/oder Fotobilder ebenfalls innerhalb der Messdaten in der Speichereinheit gespeichert werden. Dadurch können verschiedene Systeme kombiniert werden, wodurch auch der Farbton der Haut zur Identifikation mit herangezogen werden kann.

Schlussendlich ist es von Vorteil, wenn die Verarbeitungseinheit über ein lokales Netzwerk und/oder das Internet mit zumindest einer weiteren Datenbank verbunden ist. Die extrahierten biometrischen Merkmale können dadurch mit den in der zumindest einen weiteren Datenbank gespeicherten biometrischen Merkmalen abgeglichen werden. Auf diese Weise kann eine Person verschiedene sicherheitsrelevante Bereiche innerhalb eines Unternehmens betreten, die räumlich weit voneinander entfernt sind.

Verschiedene Ausführungsbeispiele der Erfindung werden nachfolgend unter Bezugnahme auf die Zeichnung beispielhaft beschrieben. Gleiche Gegenstände weisen dieselben Bezugszeichen auf. Die entsprechenden Figuren der Zeichnung zeigen im Einzelnen:
- Fig. 1: eine Übersicht über das erfindungsgemäße Personenidentifikationssystem; und
- Fig. 2: ein Flussdiagramm, welches das erfindungsgemäße Verfahren zur Identifikation von Personen beschreibt.

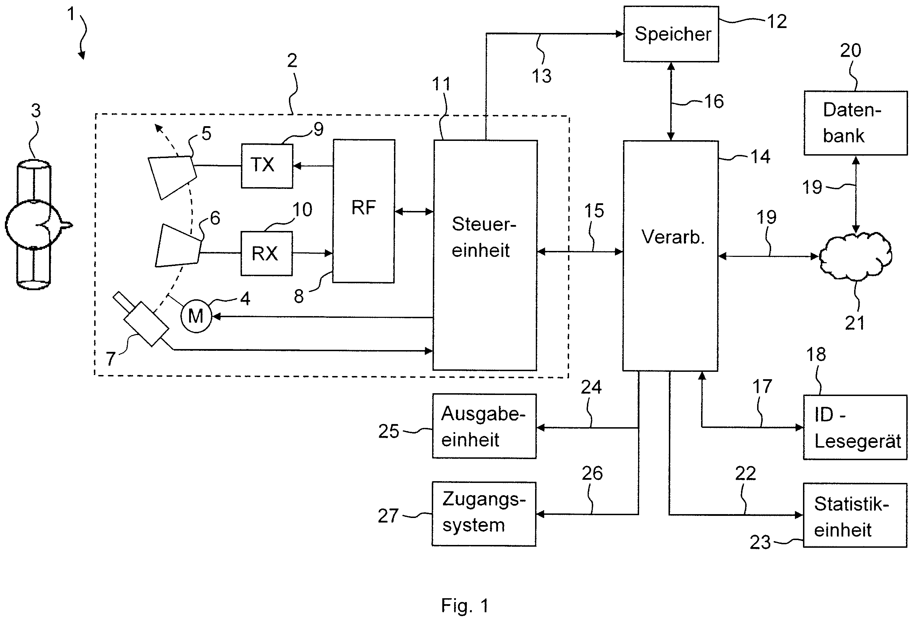

Fig. 1 zeigt eine Übersicht über das erfindungsgemäße Personenidentifikationssystem 1. Das Personenidentifikationssystem 1 weist eine Abtasteinheit 2 auf, die eine zu identifizierende Person 3 mit einer elektromagnetischen Strahlung mit einer Wellenlänge im mm-Bereich oder cm-Bereich abtastet. Um die zu identifizierende Person 3 herum ist über einen Elektromotor 4, vorzugsweise einen Schrittmotor, ein Signalaufnahmesystem bestehend aus einer Sendeantenne 5, einer Empfangsantenne 6 und optional einer optischen Kamera 7 bewegbar. Bei der Kamera 7 handelt es sich z.B. um eine Videokamera und/oder Fotokamera. Bevorzugt ist das Signalaufnahmesystem um 360° um die zu identifizierende Person 3 herum bewegbar. Vorzugsweise erfolgt dieser Abtastvorgang in mehreren Ebenen. Es können jedoch auch eine Vielzahl von Antennen zeilenweise oder matrixartig verteilt angeordnet sein, um die zu identifizierende Person 3 parallel abzutasten.

Eine Hochfrequenzeinheit 8 steht über eine Sendeeinheit 9 mit der Sendeantenne 5 in Verbindung. Gleichzeitig steht die Hochfrequenzeinheit 8 über eine Empfangseinheit 10 mit der Empfangsantenne 6 in Verbindung. Das von der Hochfrequenzeinheit 8 empfangene Signal wird an eine Steuereinheit 11 weitergegeben, welche aus dem empfangenen Signal Bild-Daten zusammenstellt. Die Steuereinheit 11 übernimmt auch die Ansteuerung des Motors 4 und der optischen Kamera 7. Wenn mehrere Antennen matrixartig verteilt vorhanden sind, ist eine Verstellung der Sendeantenne 5 und der Empfangsantenne 6 nicht notwendig. Es arbeitet nacheinander immer jeweils eine Antenne als Sendeantenne und das Signal wird von allen anderen Antennen empfangen. Der Motor 4 zur räumlichen Verstellung der Anordnung der Antennen 5 und 6 kann dann entfallen.

Sowohl das Signalaufnahmesystem, bestehend aus der Sendeantenne 5, der Empfangsantenne 6, dem Elektromotor 4 und optional der Kamera 7, als auch die Sendeeinheit 9, die Empfangseinheit 10, die Hochfrequenzeinheit 8 und die Steuereinheit 11 sind Teile der Abtasteinheit 2. Die Abtasteinheit 2 tastet die zu identifizierende Person 3 mit der elektromagnetischen Strahlung ab und erzeugt ein dreidimensionales Abbild der zu identifizierenden Person 3 und speichert dieses dreidimensionale Abbild in der Speichereinheit 12. Hierfür ist die Steuereinheit 11 mit der Speichereinheit 12 verbunden. Bei dieser Verbindung 13 handelt es sich bevorzugt um eine PCIe-Schnittstelle (engl. Peripheral Component Interconnect Express; dt. Erweiterungsstandard zur Verbindung von Peripheriegeräten). Bei der Speichereinheit 12 handelt es sich im Ausführungsbeispiel um einen Arbeitsspeicher in einem Computersystem, oder bevorzugt um einen Grafikspeicher in einer bildverarbeitenden Einheit.

Die Steuereinheit 11 ist außerdem über die Verbindung 15 mit einer Verarbeitungseinheit 14 verbunden. Bei dieser Verbindung 15 handelt es bevorzugt um eine LAN-Verbindung (engl. local area network; dt. lokales Netz), besonders bevorzugt um eine PCIe-Verbindung. Bei der Verarbeitungseinheit 14 handelt es sich um ein Computersystem. Die Verarbeitungseinheit 14 steuert über diese Verbindung 15 die Abtasteinheit 2 und die Abtasteinheit 2 meldet aktuelle Statusinformationen an die Verarbeitungseinheit 14 weiter. Die Verarbeitungseinheit 14 liest im Weiteren über die Verbindung 16 die Messdaten aus der Speichereinheit 12 aus und bereitet diese auf. Zu der Aufbereitung gehört beispielsweise die Auswahl eines Bereiches in dem mit biometrischen Merkmalen gerechnet werden kann, um dadurch den Speicherbedarf und die Rechenzeit zu reduzieren.

Anschließend beginnt die Verarbeitungseinheit 14 damit, biometrische Merkmale aus den aufbereiteten Messdaten zu extrahieren. Zu den biometrischen Merkmalen gehören z.B. die Körpergröße, die Ohrenform, bzw. die Ohrenkonturen, die Schädelform, der Augenabstand, sowie Abstände zwischen verschiedenen markanten Punkten im Gesicht, die hauptsächlich durch Gesichtsknochen gebildet werden. Außerdem kann die Verarbeitungseinheit 14 die Messdaten nach Anomalien wie Köperschmuck und/oder Operationsnarben durchsuchen und hiervon ebenfalls biometrische Merkmale erzeugen. Die biometrischen Merkmale können aus den Messdaten, die einerseits das dreidimensionale Abbild der zu identifizierenden Person 3 und andererseits Videobilder und/oder Fotobildern der Kamera 7 beinhalten, erzeugt werden.

Nachdem die Verarbeitungseinheit 14 die biometrischen Merkmale aus den aufbereiteten Messdaten extrahiert hat, werden diese mit biometrischen Merkmalen abgeglichen, die in zumindest einer weiteren Speichereinheit gespeichert sind. Als Speichereinheit sind Identifikationsdokumente und/oder Datenbanken geeignet. Hierfür stehen der Verarbeitungseinheit 14 unterschiedliche Möglichkeiten zu Verfügung. Die Verarbeitungseinheit 14 ist einerseits über die Verbindung 17 mit einem Identifikationsdokument-Schreib- und Lesegerät 18 verbunden. Über das ID-Schreib- und Lesegerät 18 können biometrische Merkmale eingelesen werden, die z.B. in Ausweisen, Führerscheinen oder Reisepässen gespeichert sind.

Das ID-Schreib- und Lesegerät 18 erlaubt auch das Einlesen von biometrischen Merkmalen, die in speziellen Zugangskarten oder Werksausweisen gespeichert sind. Auf der anderen Seite können über das ID-Schreib- und Lesegerät 18 auch biometrische Merkmale auf Zugangskarten kopiert werden, was beispielsweise dann erforderlich ist, wenn ein neuer Mitarbeiter Zutritt zu einem sicherheitsrelevanten Bereich erhalten soll. In diesem Fall werden die aus den Messdaten extrahierten biometrischen Merkmale direkt über das ID-Schreib- und Lesegerät 18 auf eine Zugangskarte kopiert. Das ID-Schreib- und Lesegerät 18 kann Zugangskarten mit Magnetstreifen und/oder RFID-Chips beschreiben (engl. radio-frequency identification; dt. Identifizierung mit Hilfe von elektromagnetischen Wellen).

Andererseits kann die Verarbeitungseinheit 14 über die Verbindung 19 mit verschiedenen Datenbanken 20 in Verbindung stehen. Die Verbindung erfolgt dabei entweder über das lokale Netzwerk und/oder über das Internet 21. Für Verbindungen zu Datenbanken 20, die über das Internet 21 aufgebaut werden, kommen bevorzugt verschlüsselte VPN-Verbindungen (engl. virtual private network; dt. virtuelles privates Netz) zum Einsatz. Bei den Datenbanken 20 kann es sich um zentrale Datenbanken eines Unternehmens handeln, in denen biometrische Merkmale gespeichert werden, so dass Mitarbeiter schnell und unkompliziert zu jedem weltweiten Standort des Unternehmens Zutritt haben. Für den Fall, dass das Personenidentifikationssystem an öffentlichen Plätzen wie z.B. Flughäfen installiert ist, können die extrahierten biometrischen Merkmale über die Verbindung 19 mit z.B. in Personenlisten gespeicherten biometrischen Merkmalen verglichen werden. Dies dient in erster Linie dazu, gesuchte und/oder vermisste Personen schnellstmöglich zu finden. Für den Abgleich können dabei auch Videoaufzeichnungen der gesuchten und/oder vermissten Person herangezogen werden. Es ist ebenfalls möglich, die aus den Messdaten extrahierten Merkmale über die Verbindung 19 in der zumindest einen Datenbank 20 zu speichern.

Weiterhin ist es der Verarbeitungseinheit 14 möglich, die aus den Messdaten extrahierten biometrischen Merkmale über die Verbindung 22 in einer Statistikeinheit 23 zu speichern. Diese können dort für statistische Zwecke und Korrelationen z.B. das Alter und/oder das Geschlecht und/oder die Nationalität benutzt werden.

Über die Verbindung 24 steht die Verarbeitungseinheit 14 mit einer Ausgabeeinheit 25 in Verbindung. Die Ausgabeeinheit 25 besteht bevorzugt aus einem Bildschirm zur Ausgabe von visuellen Informationen. Für den Fall, dass die Person 3 identifiziert ist, wird eine Meldung von der Ausgabeeinheit 25 angezeigt. Ist die Person nicht identifiziert oder handelt es sich bei der identifizierten Person 3 um eine gesuchte und/oder vermisste Person 3, so wird ein Alarm ausgegeben und das Bedienpersonal leitet weitere Schritte ein. Bei der Meldung kann es sich neben oder statt einer visuellen Meldung auch um eine akustische Meldung handeln.

Schlussendlich kann die Verarbeitungseinheit 14 über die Verbindung 26 mit zumindest einem Zugangssystem 27 verbunden sein. Ist eine Person 3 identifiziert, so wird dem Zugangssystem 27 mitgeteilt, dass dieses einen bestimmten Zugangsbereich zu einem sicherheitsrelevanten Bereich für die identifizierte Person 3 öffnen soll. Bei Flughäfen und Industrieunternehmen handelt es sich dabei z.B. um Drehkreuze, bei Banken z.B. um Tore zu Tresorräume.

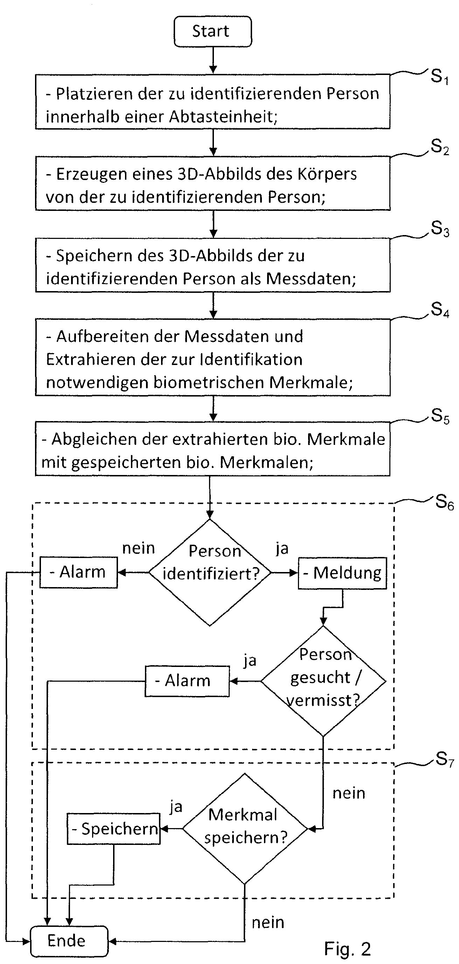

Fig. 2 zeigt ein Flussdiagramm, welches das erfindungsgemäße Verfahren zur Identifikation von Personen beschreibt. Das erfindungsgemäße Verfahren zur Identifikation von Personen besteht im Wesentlichen aus fünf Verfahrensschritten. Zwei weitere Verfahrensschritte sind dabei optional. In einem ersten Verfahrensschritt S₁ wird die zu identifizierende Person 3 in einer Abtasteinheit 2 platziert. Die Abtasteinheit 2 tastet die zu identifizierende Person 3 mittels elektromagnetischer Strahlung, die bevorzugt eine Wellenlänge im mm-Bereich und/oder cm-Bereich aufweist, ab. Dabei kann zu Beginn die Wellenlänge im mm-Bereich gewählt werden und anschließend kann die Wellenlänge auf den cm-Bereich verstellt werden. Bevorzugt bewegt sich das Signalaufnahmesystem um 360° um die zu identifizierende Person 3 herum.

In einem zweiten Verfahrensschritt S₂ wird ein dreidimensionales Abbild der Körpergeometrien der zu identifizierenden Person 3 durch die Abtasteinheit 2 erstellt. In dem zweiten Verfahrensschritt S₂ können optional Bilddaten durch die Kamera 7 erzeugt werden, die ebenfalls innerhalb der Abtasteinheit 2 ausgebildet ist.

In einem dritten Verfahrensschritt S₃ wird das erzeugte dreidimensionale Abbild der zu identifizierenden Person 3 als Messdaten innerhalb einer Speichereinheit 12 gespeichert. Optional werden in diesem dritten Schritt auch die durch die Kamera 7 erzeugten Bilddaten in den Messdaten gespeichert.

In einem vierten Verfahrensschritt S4 werden die Messdaten durch eine Verarbeitungseinheit 14 aufbereitet. Die Verarbeitungseinheit 14 extrahiert schließlich aus den aufbereiteten Messdaten die zur Identifikation der Person 3 notwendigen biometrischen Merkmale. Dabei werden bevorzugt Bereiche wie das Gesicht und/oder die Ohren aufbereitet. In dem vierten Verfahrensschritte S4 können auch zweidimensionale Abbilder vom Gesicht und/oder einer Seitenansicht des Kopfes aus den Messdaten erstellt werden, aus denen ebenfalls biometrische Merkmale extrahiert werden können. Ebenfalls werden die aufbereiteten Messdaten nach Anomalien wie Körperschmuck und/oder Operationsnarben untersucht. Aus den gefundenen Anomalien werden ebenfalls biometrische Merkmale erzeugt. Für den Fall, dass die Abtasteinheit 2 eine Kamera 7 aufweist, werden im vierten Verfahrensschritt diese Bilddaten innerhalb der Messdaten aufbereitet. Aus den aufbereiteten Bilddaten werden im Weiteren ebenfalls biometrische Merkmale extrahiert.

In einem fünften Verfahrensschritt S₅ vergleicht eine Verarbeitungseinheit 14 die extrahierten biometrischen Merkmale mit biometrischen Merkmalen, die in zumindest einer Speichereinheit gespeichert sind. Beispielsweise werden die extrahierten biometrischen Merkmale mit den in einem Identifikationsdokument gespeicherten biometrischen Merkmalen verglichen. Bei dem Identifikationsdokument kann es sich um Ausweise, Reisepässe oder Zugangskarten handeln. Dabei kommuniziert die Verarbeitungseinheit 14 mit einem Identifikationsdokument Schreib- und Lesegerät 18. Es ist natürlich auch möglich, dass die extrahierten biometrischen Merkmale mit biometrischen Merkmalen verglichen werden, die sich auf einer mit der Verarbeitungseinheit 14 verbundenen Datenbank 20 befinden. Beispielsweise können auf dieser Datenbank 20 Personenlisten von gesuchten und/oder vermissten Personen abgelegt sein. Die biometrischen Merkmale beinhalten dabei u.a. Informationen zu Gesichtszügen und/oder Körpergeometrien und/oder die Körpergröße.

Weiterhin weist das erfindungsgemäße Verfahren bevorzugt einen sechsten Verfahrensschritt S₆ auf. Innerhalb dieses Verfahrensschritts wird ein Alarm für den Fall ausgelöst, dass die zu identifizierende Person 3 nicht identifiziert werden kann, oder dass die Person 3 identifiziert ist und dass es sich bei der identifizierten Person 3 um eine gesuchte und/oder vermisste Person handelt. Dabei kommuniziert die Verarbeitungseinheit 14 mit einer Ausgabeeinheit 25. Die Ausgabeeinheit 25 gibt den Alarm optisch und/oder akustisch aus. Für den Fall, dass eine Person 3 identifiziert ist, wird über die Ausgabeeinheit 25 eine Meldung ausgegeben. Bei dieser Meldung kann es sich ebenfalls um eine optische und/oder akustische Ausgabe handeln.

In einem bevorzugten siebten Verfahrensschritt S₇ können die extrahierten biometrischen Merkmale darüber hinaus in einem Identifikationsdokument gespeichert werden. Dies geschieht bevorzugt über das Identifikationsdokument Schreib- und Lesegerät 18. Dadurch können sehr einfach Identifikationsdokument für neue Mitarbeiter erstellt werden. Ebenfalls können die extrahierten biometrischen Merkmale in einer Statistikeinheit 23 gespeichert werden und für statistische Zwecke und Korrelationen z.B. zu Alter und/oder Geschlecht und/oder Nationalität mitbenutzt werden.

Die Erfindung ist nicht auf die dargestellten Ausführungsbeispiele beschränkt. Die Erfindung ist nicht auf derartige Mikrowellenscanner, insbesondere Terahertzscanner, beschränkt. Auch andere Verfahren, die einen entsprechenden Volumendatensatz, d.h. Daten nach Betrag und Phase für jeden Voxel (diskretes Raumelement) liefern, sind geeignet, sofern sie eine dreidimensionale Oberflächendarstellung des menschlichen Körpers erlauben. Auch Röntgen-Scanner unter Verwendung von Röntgenstrahlung sind geeignet.

## Patentansprüche

1. Verfahren zur Identifikation von Personen (3) das nachfolgende Verfahrensschritte aufweist:
- Platzieren einer zu identifizierenden Person (3) in einer Abtasteinheit (2) mit einer Vielzahl von Antennen, die matrixartig angeordnet sind und ein Signalaufnahmesystem bilden und die Person (3) mittels einer elektromagnetischen Strahlung mit einer Wellenlänge im mm-Bereich und/oder cm-Bereich parallel abtasten (S₁), wobei das Signalaufnahmesystem noch eine optische Kamera (7) umfasst und wobei das Signalaufnahmesystem um die zu identifizierende Person (3) in einem Winkel von 360° herum bewegt wird;
- Erzeugen eines dreidimensionales Abbilds von Körpergeometrien der zu identifizierenden Person (3) durch die Abtasteinheit (2) (S₂);
- Speichern des erzeugten dreidimensionalen Abbilds aus den Bilddaten im mm-Bereich oder cm-Bereich und die optischen Bilddaten von der Kamera von der zu identifizierenden Person (3) als Messdaten (S₃);
- Aufbereiten der Messdaten und Extrahieren von zur Identifikation notwendigen biometrischen Merkmalen aus den Messdaten (S₄), wobei zur Aufbereitung einzig ein Bereich ausgewählt wird, in dem mit biometrischen Merkmalen gerechnet werden kann, um dadurch den Speicherbedarf und die Rechenzeit zu reduzieren;
- Abgleichen der extrahierten biometrischen Merkmale mit gespeicherten biometrischen Merkmalen (S₅),

2. Verfahren nach Anspruch 1,
**dadurch gekennzeichnet,**
**dass** in dem vierten Verfahrensschritt (S₄) Bereiche, die sich zur Identifizierung der Person (3) eignen, wie
insbesondere das Gesicht und/oder die Ohren und/oder die Schädelform, aufbereitet und extrahiert werden.

3. Verfahren nach einem der vorhergehenden Ansprüche,
**dadurch gekennzeichnet,**
**dass** in dem vierten Verfahrensschritt (S₄) zweidimensionale Abbilder von Bereichen, wie insbesondere dem Gesicht und/oder einer Seitenansicht des Kopfes der zu identifizierenden Person erstellt werden.

4. Verfahren nach einem der vorhergehenden Ansprüche,
**dadurch gekennzeichnet,**
**dass** in dem vierten Verfahrensschritt (S₄) die Messdaten auf Anomalien, wie Operationsnarben hin untersucht werden und hiervon biometrische Merkmale erzeugt werden.

5. Verfahren nach einem der vorhergehenden Ansprüche,
**dadurch gekennzeichnet,**
**dass** im zweiten Verfahrensschritt (S₂) zusätzliche Bilddaten durch eine Kamera (7) erzeugt werden.

6. Verfahren nach Anspruch 5,
**dadurch gekennzeichnet,**
**dass** im vierten Verfahrensschritt (S₄) diese Bilddaten ebenfalls aufbereitet werden und aus den aufbereiteten Bilddaten biometrische Merkmale extrahiert werden.

7. Verfahren nach einem der vorhergehenden Ansprüche,
**dadurch gekennzeichnet,**
**dass** in dem fünften Verfahrensschritt (S₅) die biometrischen Merkmale mit biometrischen Merkmalen aus zumindest einem Identifikationsdokument verglichen werden.

8. Verfahren nach Anspruch 7,
**dadurch gekennzeichnet,**
**dass** die biometrischen Merkmale Gesichtszüge und/oder die Körpergröße der zu identifizierenden Person (3) beinhalten.

9. Verfahren nach einem der vorhergehenden Ansprüche,
**dadurch gekennzeichnet,**
**dass** in dem fünften Verfahrensschritt (S₅) die biometrischen Merkmale mit biometrischen Merkmalen aus Personenlisten verglichen werden.

10. Verfahren nach einem der vorhergehenden Ansprüche,
**dadurch gekennzeichnet,**
**dass** das Verfahren einen sechsten Schritt (S₆) aufweist, welcher Folgendes umfasst:
- Ausgabe einer Meldung, falls die Person (3) identifiziert wird;
- Auslösen eines Alarms für den Fall, dass eine gesuchte und/oder vermisste Person (3) identifiziert wird

11. Verfahren nach einem der vorhergehenden Ansprüche,
**dadurch gekennzeichnet,**
**dass** das Verfahren einen siebten Schritt (S₇) aufweist, welcher Folgendes umfasst:
- Speichern von biometrischen Merkmalen, die zur Identifizierung dienen, in einem Identifikationsdokument oder in einer Datenbank;

12. Personenidentifikationssystem (1) das eine Abtasteinheit (2) mit einer Vielzahl von Antennen aufweist, die matrixartig verteilt angeordnet sind und ein Signalaufnahmesystem bilden und eine zu identifizierende Person (3) mittels einer elektromagnetischen Strahlung mit einer Wellenlänge im mm-Bereich und/oder cm-Bereich parallel abtasten, wobei das Signalaufnahmesystem noch eine optische Kamera (7) umfasst und wobei das Signalaufnahmesystem um die zu identifizierende Person (3) in einem Winkel von 360° herum bewegt wird; und ein dreidimensionales Abbild von Körpergeometrien aus den Bilddaten im mm-Bereich oder cm-Bereich der zu identifizierenden Person (3) wie auch die optischen Bilddaten von der Kamera als Messdaten in einer Speichereinheit (12) erstellt, wobei das Personenidentifikationssystem (1) weiterhin eine Verarbeitungseinheit (14) aufweist, die die Messdaten aufbereitet, wobei für die Aufbereitung einzig ein Bereich auswählbar ist, in dem mit biometrischen Merkmalen gerechnet werden kann, um dadurch den Speicherbedarf und die Rechenzeit zu reduzieren, und die zur Identifikation notwendigen biometrischen Merkmale extrahiert und diese mit biometrischen Merkmalen vergleicht, die ebenfalls gespeichert sind.

13. Personenidentifikationssystem nach Anspruch 12,
**dadurch gekennzeichnet,**
**dass** es sich bei den biometrischen Merkmalen um Gesichtskonturen und/oder Ohrenkonturen und/oder eine Körpergröße handelt.

14. Personenidentifikationssystem nach Anspruch 12 oder 13,
**dadurch gekennzeichnet,**
**dass** die biometrischen Merkmale ein Gesicht und/oder eine Seitenansicht des Kopfes beinhalten.

15. Personenidentifikationssystem nach einem der Ansprüche 12 bis 14,
**dadurch gekennzeichnet,**
**dass** die Messdaten in der Verarbeitungseinheit (14) auf Anomalien, wie Operationsnarben, hin untersucht werden und dass die Verarbeitungseinheit (14) hiervon biometrische Merkmale erzeugt.

16. Personenidentifikationssystem nach einem der Ansprüche 12 bis 15,
**dadurch gekennzeichnet,**
**dass** zusätzlich eine Kamera (7) mit einer Steuereinheit (11) verbunden ist und die Steuereinheit (11) Videobilder und/oder Fotobilder in den Messdaten in der Speichereinheit (12) speichert.

17. Personenidentifikationssystem nach einem der Ansprüche 12 bis 16,
**dadurch gekennzeichnet,**
**dass** die Verarbeitungseinheit (14) die biometrischen Merkmale mit biometrischen Merkmalen, die in Identifikationsdokumenten gespeichert sind über ein Identifikationsdokument Schreib- und Lesegerät (18) abgleicht.

18. Personenidentifikationssystem nach einem der Ansprüche 12 bis 17,
**dadurch gekennzeichnet,**
**dass** die Verarbeitungseinheit (14) die biometrischen Merkmale über ein Identifikationsdokument Schreib- und Lesegerät (18) auf zumindest ein Identifikationsdokument kopiert.

19. Personenidentifikationssystem nach einem der Ansprüche 12 bis 18,
**dadurch gekennzeichnet,**
**dass** die Verarbeitungseinheit (14) über ein lokales Netzwerk und/oder Internet mit zumindest einer Datenbank (20) verbunden ist, worüber die Verarbeitungseinheit (14) die biometrischen Merkmale mit den dort gespeicherten biometrischen Merkmalen von gesuchten und/oder vermissten Personen abgleicht.

20. Personenidentifikationssystem nach einem der Ansprüche 12 bis 19,
**dadurch gekennzeichnet,**
**dass** die Verarbeitungseinheit (14) mit einer Ausgabeeinheit (25) verbunden ist, die eine Meldung anzeigt, wenn eine Person (3) identifiziert ist oder einen Alarm ausgibt, wenn die Person (3) nicht identifiziert ist, bzw. wenn es sich bei der Person um eine vermisste und/oder gesuchte Person handelt.

21. Personenidentifikationssystem nach einem der Ansprüche 12 bis 20,
**dadurch gekennzeichnet,**
**dass** die Verarbeitungseinheit (14) mit einem Zugangssystem (27) verbunden ist, das einen Zugang frei gibt, wenn die Person (3) identifiziert ist.

22. Personenidentifikationssystem nach einem der Ansprüche 12 bis 21,
**dadurch gekennzeichnet,**
**dass** die Verarbeitungseinheit (14) mit einer Statistikeinheit (23) verbunden ist und die biometrischen Merkmale in dieser speichert.

## Claims

1. Method for identifying persons (3) which comprises the following method steps:
- placement of a person (3) to be identified in a scanning unit (2) with a plurality of antennas which are arranged like a matrix and form a signal receiving or recording system and scan the person (3) in parallel by means of electromagnetic radiation with a wavelength in the mm range and/or cm range (S₁), wherein the signal recording system also comprises an optical camera (7) and wherein the signal recording system is moved around the person (3) to be identified through an angle of 360°;
- generation of a three-dimensional image of body geometries of the person (3) to be identified by the scanning unit (2) (S₂);
- storage of the generated three-dimensional image composed of the image data in the mm range or cm range and the optical image data from the camera of the person (3) to be identified as measurement data (S₃);
- processing of the measurement data and extraction of biometric features needed for the identification from the measurement data (S₄), wherein for the processing only one area is selected in which biometric features can be expected in order thereby to reduce the storage requirement and the computing time;
- comparison of the extracted biometric features with stored biometric features (S₅).

2. Method according to claim 1,
**characterised in that**
in the fourth method step (S₄) areas which are suitable for the identification of the person (3), such as in particular the face and/or the ears and/or the shape of the skull, are processed and extracted.

3. Method according to one of the preceding claims,
**characterised in that**
in the fourth method step (S₄) two-dimensional images of areas, such as in particular the face and/or a side view of the head of the person to be identified, are produced.

4. Method according to one of the preceding claims,
**characterised in that**
in the fourth method step (S₄) the measurement data are examined for anomalies, such as post-operative scars, and biometric features are generated using these.

5. Method according to one of the preceding claims,
**characterised in that**
in the second method step (S₂) additional image data are generated by a camera (7).

6. Method according to claim 5,
**characterised in that**
in the fourth method step (S₄) these image data are also processed, and biometric features are extracted from the processed image data.

7. Method according to one of the preceding claims,
**characterised in that**
in the fifth method step (S₅) the biometric features are compared with biometric features from at least one identification document.

8. Method according to claim 7,
**characterised in that**
the biometric features include facial features and/or the body size of the person (3) to be identified.

9. Method according to one of the preceding claims,
**characterised in that**
in the fifth method step (S₅) the biometric features are compared with biometric features from lists of persons.

10. Method according to one of the preceding claims, **characterised in that**
the method comprises a sixth step (S₆) which comprises the following:
- outputting of a message if the person (3) is identified;
- triggering of an alarm in the event that a wanted or missing person (3) is identified.

11. Method according to one of the preceding claims,
**characterised in that**
the method comprises a seventh step (S₇) which comprises the following:
- storage of biometric features which are used for identification, in an identification document or in a data base.

12. Person identification system (1) which comprises a scanning unit (2) with a plurality of antennas which are arranged distributed like a matrix and form a signal receiving or recording system and scan a person (3) to be identified in parallel by means of electromagnetic radiation with a wavelength in the mm range and/or cm range, wherein the signal recording system also comprises an optical camera (7) and wherein the signal recording system is moved around the person (3) to be identified through an angle of 360°, and produces a three-dimensional image of body geometries of the person (3) to be identified composed of the image data in the mm range or cm range together with the optical image data from the camera as measurement data in a storage unit (12), wherein the person identification system (1) also comprises a processing unit (14) which processes the measurement data, wherein for the processing it is possible to select only one area in which biometric features can be expected in order thereby to reduce the storage requirement and the computing time, and which extracts the biometric features needed for the identification and compares these with biometric features which are also stored.

13. Person identification system according to claim 12,
**characterised in that**
the biometric features are contours of the face and/or contours of the ears and/or a body size.

14. Person identification system according to claim 12 or 13,
**characterised in that**
the biometric features include a face and/or a side view of the head.

15. Person identification system according to one of claims 12 to 14,
**characterised in that**
in the processing unit (14) the measurement data are examined for anomalies, such as post-operative scars, and **in that** the processing unit (14) generates biometric features using these.

16. Person identification system according to one of claims 12 to 15,
**characterised in that**
in addition a camera (7) is connected with a control unit (11) and the control unit (11) stores video images and/or photographic images in the measurement data in the storage unit (12).

17. Person identification system according to one of claims 12 to 16,
**characterised in that**
the processing unit (14) compares the biometric features with biometric features which are stored in identification documents using an identification document writing and reading device (18).

18. Person identification system according to one of claims 12 to 17,
**characterised in that**
the processing unit (14) copies the biometric features to at least one identification document using an identification document writing and reading device (18).

19. Person identification system according to one of claims 12 to 18,
**characterised in that**
the processing unit (14) is connected with at least one data base (20) by means of a local network and/or internet, through which the processing unit (14) compares the biometric features with the biometric features stored there of wanted and/or missing persons.

20. Person identification system according to one of claims 12 to 19,
**characterised in that**
the processing unit (14) is connected with an outputting unit (25) which displays a message when a person (3) is identified or outputs an alarm when the person (3) is not identified or when the person is a missing and/or wanted person.

21. Person identification system according to one of claims 12 to 20,
**characterised in that**
the processing unit (14) is connected with an access control system (27) which releases an access control means when the person (3) is identified.

22. Person identification system according to one of claims 12 to 21,
**characterised in that**
the processing unit (14) is connected with a statistics unit (23) and stores the biometric features in the latter.

## Revendications

1. Procédé d'identification de personnes (3) qui présente les étapes de procédé suivantes :
- placement d'une personne (3) à identifier dans une unité de balayage (2) avec une pluralité d'antennes qui sont agencées selon une disposition matricielle et forment un système d'enregistrement de signaux et balaient en parallèle la personne (3) au moyen d'un rayonnement électromagnétique avec une longueur d'onde dans la zone mm et/ou la zone cm (S₁), dans lequel le système d'enregistrement de signal comprend également une caméra (7) optique et dans lequel le système d'enregistrement de signaux est déplacé autour de la personne (3) à identifier selon un angle à 360° ;
- production d'une image tridimensionnelle de géométries corporelles de la personne (3) à identifier par l'unité de balayage (2) (S₂) ;
- stockage de l'image tridimensionnelle produite à partir des données d'image dans la zone mm ou la zone cm et les données d'image optiques de la caméra de la personne (3) à identifier en tant que données de mesure (S₃) ;
- préparation des données de mesure et extraction des caractéristiques biométriques nécessaires à l'identification à partir des données de mesure (S₄), dans lequel pour la préparation seule une zone est sélectionnée dans laquelle il peut être mesuré avec des caractéristiques biométriques afin ainsi de réduire l'encombrement de stockage et le temps de calcul ;
- recoupement des caractéristiques biométriques extraites avec des caractéristiques biométriques stockées (S₅).

2. Procédé selon la revendication 1,
**caractérisé**
**en ce que** dans la quatrième étape de procédé (S₄) des zones qui conviennent pour l'identification de la personne (3), comme en particulier le visage et/ou les oreilles et/ou la forme du crâne, sont préparés et extraits.

3. Procédé selon l'une des revendications précédentes,
**caractérisé**
**en ce que** dans la quatrième étape de procédé (S₄) des images bidimensionnelles de zones, comme en particulier le visage et/ou une vue latérale de la tête de la personne à identifier, sont établies.

4. Procédé selon l'une des revendications précédentes,
**caractérisé**
**en ce que** dans la quatrième étape de procédé (S₄) les données de mesure sont examinées à propos d'anomalies, comme des cicatrices postopératoires, et que partant de là, des caractéristiques biométriques sont produites.

5. Procédé selon l'une des revendications précédentes,
**caractérisé**
**en ce que** dans la deuxième étape de procédé (S₂) des données d'image supplémentaires sont produites par une caméra (7).

6. Procédé selon la revendication 5,
**caractérisé**
**en ce que** dans la quatrième étape de procédé (S₄) ces données d'image sont également préparées et qu'à partir des données d'image préparées des caractéristiques biométriques sont extraites.

7. Procédé selon l'une des revendications précédentes,
**caractérisé**
**en ce que** dans la cinquième étape de procédé (S₅) les caractéristiques biométriques sont comparées à des caractéristiques biométriques d'au moins un document d'identification.

8. Procédé selon la revendication 7,
**caractérisé**
**en ce que** les caractéristiques biométriques contiennent des traits du visage et/ou la taille corporelle de la personne (3) à identifier.

9. Procédé selon l'une des revendications précédentes,
**caractérisé**
**en ce que** dans la cinquième étape de procédé (S₅) les caractéristiques biométriques sont comparées à des caractéristiques biométriques de listes de personnes.

10. Procédé selon l'une des revendications précédentes,
**caractérisé**
**en ce que** le procédé présente une sixième étape (S₆) qui comprend ce qui suit :
- envoi d'une annonce, au cas où la personne (3) est identifiée ;
- déclenchement d'une alarme pour le cas où une personne (3) recherchée et/ou disparue est identifiée.

11. Procédé selon l'une des revendications précédentes,
**caractérisé**
**en ce que** le procédé présente une septième étape (S₇) qui comprend ce qui suit :
- stockage de caractéristiques biométriques qui servent à l'identification, dans un document d'identification ou dans une banque de données.

12. Système d'identification de personnes (1) qui présente une unité de balayage (2) avec une pluralité d'antennes, qui sont agencées en étant réparties selon une disposition matricielle et forment un système d'enregistrement de signaux et balaient en parallèle une personne (3) à identifier au moyen d'un rayonnement électromagnétique avec une longueur d'onde dans la zone mm et/ou la zone cm, dans lequel le système d'enregistrement de signal comprend également une caméra (7) optique et dans lequel le système d'enregistrement de signaux est déplacé autour de la personne (3) à identifier selon un angle à 360° ; et établit dans une unité de stockage (12) une image tridimensionnelle de géométries corporelles à partir des données d'image dans la zone mm ou la zone cm de la personne (3) à identifier ainsi que les données d'image optiques de la caméra en tant que données de mesure, dans lequel le système d'identification de personnes (1) présente en outre une unité de traitement (14), qui prépare les données de mesure, dans lequel pour la préparation seule une zone peut être sélectionnée dans laquelle il peut être mesuré avec des caractéristiques biométriques afin ainsi de réduire l'encombrement de stockage et le temps de calcul, et qui extrait les caractéristiques biométriques nécessaires à l'identification et compare celles-ci à des caractéristiques biométriques qui sont également stockées.

13. Système d'identification de personnes selon la revendication 12,
**caractérisé**
**en ce que** les caractéristiques biométriques sont des contours de visage et/ou des contours d'oreilles et/ou une taille corporelle.

14. Système d'identification de personnes selon la revendication 12 ou 13,
**caractérisé**
**en ce que** les caractéristiques biométriques contiennent un visage et/ou une vue latérale de la tête.

15. Système d'identification de personnes selon l'une des revendications 12 à 14,
**caractérisé**
**en ce que** les données de mesure dans l'unité de traitement (14) sont examinées à propos d'anomalies, comme des cicatrices postopératoires, et **en ce que** partant de là l'unité de traitement (14) produit des caractéristiques biométriques.

16. Système d'identification de personnes selon l'une des revendications 12 à 15,
**caractérisé**
**en ce que** par ailleurs une caméra (7) est reliée à une unité de commande (11) et l'unité de commande (11) stocke des images vidéo et/ou des images photographiques dans les données de mesure dans l'unité de stockage (12).

17. Système d'identification de personnes selon l'une des revendications 12 à 16,
**caractérisé**
**en ce que** l'unité de traitement (14) recoupe les caractéristiques biométriques avec des caractéristiques biométriques qui sont stockées dans des documents d'identification via un instrument d'écriture et de lecture de document d'identification (18).

18. Système d'identification de personnes selon l'une des revendications 12 à 17,
**caractérisé**
**en ce que** l'unité de traitement (14) copie les caractéristiques biométriques via un instrument d'écriture et de lecture de document d'identification (18) sur au moins un document d'identification.

19. Système d'identification de personnes selon l'une des revendications 12 à 18,
**caractérisé**
**en ce que** l'unité de traitement (14) est reliée via un réseau local et/ou Internet à au moins une banque de données (20) par-dessus laquelle l'unité de traitement (14) recoupe les caractéristiques biométriques avec les caractéristiques biométriques qui y sont stockées de personnes recherchées et/ou disparues.

20. Système d'identification de personnes selon l'une des revendications 12 à 19,
**caractérisé**
**en ce que** l'unité de traitement (14) est reliée à une unité d'envoi (25) qui affiche une annonce lorsqu'une personne (3) est identifiée ou délivre une alarme lorsque la personne (3) n'est pas identifiée ou lorsqu'il s'agit d'une personne disparue et/ou recherchée.

21. Système d'identification de personnes selon l'une des revendications 12 à 20,
**caractérisé**
**en ce que** l'unité de traitement (14) est reliée à un système d'accès (27) qui libère un accès lorsque la personne (3) est identifiée.

22. Système d'identification de personnes selon l'une des revendications 12 à 21,
**caractérisé**
**en ce que** l'unité de traitement (14) est reliée à une unité statistique (23) et stocke les caractéristiques biométriques dans celle-ci.
